# EUROPEAN PATENT APPLICATION

(11) **EP 1 801 179 A1**
(43) Date of publication of application: **27.06.2007**
(21) Application number: 05112951.8
(22) Date of filing: 23.12.2005
(51) Int. Cl.: C09J 175/04, C09J 5/06

(54) **An adhesive composition comprising a polyol base part and an isocyanate hardener and the use thereof**

(71) Applicant: Sika Technology AG, 6340 Baar (CH)
(72) Inventor: Pind, Martin, 2100, Copenhagen (DK); Hansen, Steffen S., 3310, Ølsted (DK)
(74) Representative: Isler, Jörg

(57) **Abstract**

An adhesive composition comprising a two component polyurethane binder comprising a polyol base part comprising a catalyst and a low viscosity solvent-free MDI hardener, wherein the polyol base part has a viscosity <10,000 mPa·s. (Brookfield RTV 3/20 at 23°C and 50% R.H.) shows improved water and wearing resistance. Furthermore, the composition has a relatively long open time and a very short curing time when activating the catalyst.

## Description

### BACKGROUND OF THE INVENTION

### 1. Field of the Invention

The present invention relates to an adhesive composition, a polyol composition for use as polyol base part in a polyurethane adhesive, the use of such an adhesive in the manufacture of wearing surfaces, a method of producing an object having a surface having high resistance to wear and an object having a surface showing a high resistance to wear.

### 2. Description of the Related Art

When casting objects of concrete, such as flagstones or blocks for paving footpaths or driveways or terraces, precision is required in order to enable the production of flagstones which may be paved in patterns. When casting concrete blocks a series of casting forms are placed next to each other directly on a surface of a wood panel treated with oil such as a natural oil and filled with concrete. Then a second panel is placed on top of the first panel using four separation blocks in the corners of the panel. Then, a further set of casting forms are used, and a further panel etc. building a "tower" of panels separated by casting forms filled with concrete, and the tower is vibrated for removing air bubbles and left for hardening. After curing typically by heating at about 60°C for 10 to 15 minutes at ≈95% RH, the blocks are removed and left for hardening and the panels and casting forms are reused. Wood panels are normally used due to the aggressiveness of the wet concrete.

However, even when using hardwood panels, there is a considerable wear of the surface of the wood panels used for such casting due to the influence by water and abrasion due to vibration, which renders the panels unsuitable for the purpose and necessitates substitution with fresh panels in order to maintain the necessary precision of the dimensions of the products causing considerable costs and producing a huge amount of waste panels.

Thus, there is a need for wood panels having a surface showing drastically improved water and wearing resistance. Furthermore an adhesive composition for use in a surface layer for providing improved water and wearing resistance should have a relatively long open-time and be rapidly curing.

It has now been found that it is possible to provide an adhesive composition which gives rise to a surface showing drastically improved wearing resistance when applying on the surface of wood panels a layer of felt and an adhesive composition according to the invention, which adhesive composition further has a relatively long open-time and is rapidly curing.

### SUMMARY OF THE INVENTION

The present invention relates to an adhesive composition comprising a two component polyurethane binder comprising a polyol base part comprising a catalyst and a low viscosity solvent-free MDI hardener, wherein the polyol base part has a viscosity <10,000 mPa·s. (Brookfield RTV 3/20 at 23°C and 50% R.H.).

In a second aspect the invention relates to a polyol composition suitable for use as polyol base part in the manufacture of polyurethane adhesive compositions having a viscosity <10,000 mPa·s. (Brookfield RTV 3/20 at 23°C and 50% R.H.).

In a third aspect the invention relates to the use of an adhesive composition having a low viscosity together with a felt in the manufacture of wearing surfaces on an object said wearing surface comprising the adhesive composition and the felt.

In a fourth aspect the invention relates to a method of producing an object having a surface showing a high resistance to wear comprising covering the surface with a layer of felt, applying an adhesive composition comprising a heat activated delayed-action catalyst and being capable of wetting the felt and the surface to be protected, pressing the surface layer of felt wetted with adhesive against the surface of the object and forming a dense layer essentially without entrapped air bubbles and heating for curing the adhesive.

In a fifth aspect the invention relates to an object having a surface showing a high resistance to wear, which surface is covered by a layer comprising a felt and an adhesive composition without entrapped bubbles of air.

### Detailed Description of the Present Invention

The present invention relates to an adhesive composition comprising a two component polyurethane binder comprising a polyol base part comprising a catalyst and a low viscosity solvent-free MDI hardener, wherein the polyol base part has a viscosity <10,000 mPa·s. (Brookfield RTV 3/20 at 23°C and 50% R.H.).

The binder should be sufficiently fluid to penetrate felt and wet the felt and to wet the surface of the wood panel and to provide a smooth surface after curing.

The polyol base part preferably has a viscosity <5,000 mPa·s. (Brookfield RTV 3/20 at 23°C and 50% RH).

The hardness of the cured adhesive composition is suitably greater than 75 Shore D, preferably above 80 Shore D in <24 hours.

The catalyst is preferably a heat activated delayed-action catalyst.

An adhesive composition of the invention may also comprise further components commonly used in adhesive compositions such as additives or fillers. Typically the polyol base part comprises from about 50 to about 85 % by weight of one or more polyols, from about 10 to about 20% by weight of one or more mineral fillers, from about 12 to about 20% by weight of a water removing component, from about 0.5 to about 1.5% by weight of a deaeration agent, above about 0.5% by weight of a heat activated delayed-action catalyst, from about 0.4 to about 0.6% by weight of a rheology and thixotropy controlling agent, and from about 0.3 to about 0.8% by weight of one or more agents for wetting and stabilization of inorganic and organic pigments.

In a preferred embodiment of the invention the polyol base part comprises about 66.7% by weight of polyol component, about 15.3% by weight of calcium carbonate powders, about 15% water removing component, about 1% by weight of a deaeration agent, about 1% by weight of a heat activated delayed-action catalyst, about 0.5% by weight of a rheology and thixotropy controlling agent, and about 0.5% weight of a combination one or more of wetting and stabilization agents.
Such a polyol base part has been found to have a shelf life in original closed packaging of at least 3 months.

A two component adhesive composition according to the invention was made from a polyol component (Component A) having the above-mentioned preferred composition and as component B was used a hardener Desmodur VKS 20 F.

An adhesive composition was made by mixing 100 parts by weight of Component A with 40 parts by weight of Component B.

The polyol component had a viscosity at 23°C (Brookfield 4/20) of approximately 2500 mPa·s and the resulting mixture had a viscosity at 23°C (Brookfield 4/20) of approximately 2000 mPa·s. The mixture had an open-time of 60 minutes at 23°C, and a hardness of approximately 80-85 Shore D (V1) after curing 5 minutes at 70°C under a pressure of 100-200 bar.

The polyol component may suitably comprise a natural polyol oil such as castor oil, a low viscous glycerine propoxylated polyether triol such as Voranol CP 450 from Dow Plastics having a viscosity of 300-360 cSt at 23°C according to ATSM D445-94, or a higher functional polyether polyol based on sorbitol such as Lupranol® 3422 from BASF.

The mineral fillers may suitably be calcium carbonate powders such as marble powder such as OMYACARB^{™} 10 - GU from Omya AB having a mean particle size of 7µm or calcium carbonate powder such as OMYALITE® 90 from Omya AB having a mean particle size of 1 µm. The filler may suitably be a mixture of filers of a different particle size for adjusting the viscosity of the polyol component and decreasing the sedimentation.

The water removing component may be a water absorbing mineral powder such as a zeolite, suitably an A zeolite such as UOP L powder from UOP LLC. The presence of a water removing agent is essential as e.g. wood panels to be provided with an adhesive composition of the invention may have a content of moisture which can cause formation of foam during the hardening. The same applies when using a felt of natural fibres which may have a relatively high content of humidity.

The deaeration agent deaerates liquid compositions and a suitable agent is NO AIR FLUESSIG from Baerlocher.

A heat activated delayed-action catalyst may suitably be present in an amount of 0.7 to 1.2% by weight giving rise to a relatively long open time of about 1 hour allowing reasonable time for applying the adhesive composition and providing for a very short curing time of about 5 minutes when activating the catalyst. When adding a larger amount of catalyst a very short curing time to the detriment of the open time which may be too short for practical purposes is obtained. A suitable catalyst is a based on the cyclic amine 1,5-diazabicyclo[5.0.4]undec-5-ene such as POLYCAT® SA-1 from Air Products having a suitable activation temperature.

It is preferred that the catalyst is a heat activated delayed-action catalyst which accelerates the curing at temperatures above about 60°C enabling a long open-time at temperatures normally occurring when handling the adhesive compositions and providing a very short press time of the order of 5 minutes at about 70°C reducing the needed curing time of the composition.

The rheology and thixotropy controlling agent may suitably be a fumed silica having a high specific surface of 150 to 250 m²/g, e.g. 175 to 225 m²/g such as Aerosil®200 having a specific surface of 200 m²/g.

The agents for wetting and stabilization of inorganic and organic pigments may suitably be mixture of a solvent such as an alkyl benzene having up to 18 carbon atoms in the alkyl moiety, suitably dodecyl benzene and a dispersing additive for solvent based systems such as Colorol F produced by Tego and obtainable from Goldschmidt. Such a mixture suitably contains the solvent and the wetting and dispersing additive in a proportion of from 1:3 to 1:5.

The hardener for use in a composition of the invention may suitably be a diisocyanate such as diphenyl-4,4'-diisocyanate (MDI) or a mixture comprising isomers and homologues having higher function or polymeric MDI. Suitable hardeners are e.g. Desmodur® VK10, VKS 20, VKS 20 F , VKS 20 L or VKS 44, Lupranat® M 20 S from BASF, Suprasec 5025 from Huntsman and Sika-Force®-7010.

It has been found that a drastically improved wearing resistance of a surface on wood panels is obtained with respect to casting of concrete flagstones when provided with a layer of felt and binder according to the invention. Furthermore, the panels may be regenerated after use by applying a fresh coating of felt and binder reducing the demand for fresh wood panels and reducing the amount of waste panels.

In a second aspect the invention relates to a polyol composition suitable for use as polyol base part in the manufacture of polyurethane adhesive compositions having a viscosity <10,000 mPa·s. (Brookfield RTV 3/20 at 23°C and 50% RH). The polyol composition preferably comprises a heat activated delayed-action catalyst.

A polyol composition according to the invention may also comprise further components commonly used in adhesive compositions such as additives or fillers as stated above in connection with adhesive compositions according to the invention.

Adhesive compositions or polyol compositions according to the invention may be produced in a manner known per se by mixing the components in a dissolver until essential homogeneity. Normally it is preferred to mix the liquid constituents first and then to add the dry components.

In a third aspect the invention relates to the use of an adhesive composition having a low viscosity together with a felt in the manufacture of wearing surfaces on an object said wearing surface comprising the adhesive composition and the felt.

An adhesive composition for use according to the invention is suitably an epoxy or a polyurethane adhesive composition giving rise to water and abrasion resistant surfaces.

It is preferred that the adhesive composition is a polyurethane adhesive composition as it provides a rapid and sufficient wetting of a felt and the surface of a wood panel and does not show the highly allergenic effects often shown by epoxy compositions.

In a preferred embodiment of the invention an adhesive composition comprising a two component polyurethane binder comprising a polyol base part comprising a catalyst and a low viscosity solvent-free MDI hardener, wherein the polyol base part has a viscosity <10,000 mPa·s. (Brookfield RTV 3/20 at 23°C and 50% R.H.) is used.

An object which may be provided with a surface layer in accordance with the invention may e.g. be made from a material which is to be used under conditions where it has to withstand influence from water and/or friction which is not immediately met by the material itself. One example is wood panels for use for concrete casting boards.

For such applications the weight of the panel plus coating should be kept low in order not to make the handling thereof difficult. This favours the use of panels of wood such as birch, larch or hardwood such as mahogany, teak, meranti or oak.

For such use the adhesive composition is preferably used together with a felt in the manufacture of a wearing surface comprising the adhesive composition and the felt.

In a fourth aspect the invention relates to a method of producing an object having a surface showing a high resistance to wear comprising covering the surface with a layer of felt, applying an adhesive composition comprising a heat activated delayed-action catalyst and being capable of wetting the felt and the surface to be protected, pressing the surface layer of felt wetted with adhesive against the surface of the object and forming a dense layer essentially without entrapped air bubbles and heating for curing the adhesive.

A felt for use in accordance with the invention may be a recycled material being inexpensive or a fresh material.

The nature of the felt is not critical if it is wetted by the adhesive composition, improves the wearing resistance and has a content of moisture sufficiently low to avoid problems such as adverse effect on the curing of the adhesive composition or formation of gas or steam forming bubbles in the material when curing a composite material comprising the felt and the adhesive composition. When working with polyurethane adhesive compositions, a content of moisture below 15% is suitable and will not give rise to problems, especially when the adhesive composition comprises a water removing component.

Suitable fibres for the felt for the purpose of the present invention are natural fibres such as hemp, abaca, sisal, coir, jute, flax or cotton fibres, hemp fibres being preferred from a price and availability point of view.

An adhesive composition for use according to the invention is suitably an epoxy or a polyurethane adhesive composition giving rise to water and abrasion resistant surfaces.

It is preferred that the adhesive composition is a polyurethane adhesive composition as it provides a rapid and sufficient wetting of the felt and the surface of a wood panel and does not show the highly allergenic effects often shown by epoxy compositions.

In the method it is preferred that the surface layer of felt wetted with adhesive is pressed against the surface of the object using a pressure of from 100 to 200 bar.

Furthermore, it is preferred that the curing is carried out at a temperature above 50°C, more preferred at a temperature about 70°C although curing may be carried out at room temperature demanding longer time for the curing.

In a fifth aspect the invention relates to an object having a surface showing a high resistance to wear, which surface is covered by a layer of felt and a binder without entrapped bubbles of air.
Panels according to the invention were made from wood panels having a size of 1.20x1.40 m and a thickness of 46 mm cm using a preferred adhesive as disclosed above. The adhesive composition was applied on one side of a layer of felt using a conventional manual sprayer, and a layer of felt wetted with adhesive was placed on each side of the panels which were then pressed in a hydraulic press at 70°C for about 5 minutes at 100-200 bar. A rapid curing was observed and a hardness of 70 Shore-D was obtained after only 15 minutes after the plates left the press. Furthermore, the surface was hard wear and water resistant.

## Claims

1. An adhesive composition comprising a two component polyurethane binder comprising a polyol base part comprising a catalyst and a low viscosity solvent-free MDI hardener, wherein the polyol base part has a viscosity <10,000 mPa·s. (Brookfield RTV 3/20 at 23°C and 50% R.H.).

2. An adhesive as claimed in claim 1, wherein the polyol base part has a viscosity <5,000 mPa·s. (Brookfield RTV 3/20 at 23°C and 50% R.H.).

3. An adhesive as claimed in claim 1 or 2, wherein the catalyst is a heat activated delayed-action catalyst which accelerates the curing at temperatures above 60°C.

4. An adhesive as claimed in any of claims 1-3, wherein the polyol base part comprises from about 50 to about 85% by weight of one or more polyols, from about 10 to about 20% by weight of one or more fillers calcium carbonate powders, from about 12 to about 20% by weight of a water removing component, from about 0.5 to about 1.5% by weight of a deaeration agent, above about 0.5% by weight of a catalyst, from about 0.4 to about 0.6% by weight of a rheology and thixotropy control agent, and from about 0.3 to about 0.8% by weight of a one or more agents for wetting and stabilization of inorganic and organic pigments.

5. An adhesive as claimed in any of claims 1-4, wherein the catalyst is present in an amount of 0.7 to 1.2% by weight.

6. A polyol composition suitable for use as polyol base part in the manufacture of polyurethane adhesive compositions having a viscosity <10,000 mPa·s. (Brookfield RTV 3/20 at 23°C and 50% R.H.).

7. A polyol composition according to claim 6 comprising a heat activated delayed-action catalyst.

8. A polyol composition as claimed in claim 7, wherein the catalyst is present in an amount of above about 0.5% by weight, preferably 0.7 to 1.2% by weight.

9. The use of an adhesive composition having a low viscosity together with a felt in the manufacture of wearing surfaces on an object, said wearing surface comprising the adhesive composition and the felt.

10. The use as claimed in claim 9, wherein the adhesive composition is an epoxy or a polyurethane adhesive composition.

11. The use as claimed in claim 10, wherein the adhesive composition is a polyurethane adhesive composition.

12. The use as claimed in claim 11, wherein the adhesive composition comprises a two component polyurethane binder comprising a polyol base part comprising a catalyst and a low viscosity solvent-free MDI hardener, wherein the polyol base part has a viscosity <10,000 mPa·s. (Brookfield RTV 3/20 at 23°C and 50% R.H.).

13. A method of producing an object having a surface showing a high resistance to wear, comprising applying an adhesive composition comprising a heat activated delayed-action catalyst to the felt, the adhesive composition being capable of wetting the felt, pressing the surface layer of felt wetted with adhesive against the surface of the object and forming a dense layer essentially without entrapped air bubbles and heating for curing the adhesive.

14. A method as claimed in claim 13 in which the felt is made from natural fibres.

15. A method as claimed in claim 14, wherein the felt is made from hemp, abaca, sisal, coir, jute, flax or cotton fibres.

16. A method as claimed in any of claims 13-15, wherein the adhesive composition is an epoxy or a polyurethane adhesive composition.

17. A method as claimed in claim 16, wherein the adhesive composition is a polyurethane adhesive composition as claimed in one of the claims 1 to 5.

18. A method as claimed in any of claims 13-17, wherein the surface layer of felt wetted with adhesive is pressed against the surface of the object using a pressure of from 100 to 200 bar.

19. A method as claimed in any of claims 13-18, wherein the curing is carried out at a temperature above 50°C.

20. An object having a surface showing a high resistance to wear, which surface is covered by a layer comprising a felt and an adhesive composition without entrapped bubbles of air.

21. An object as claimed in claim 20 in the form of a panel having two surfaces each covered with a layer comprising a felt and an adhesive composition.

22. An object as claimed in claim 20 or 21, wherein the object is a casting object for concrete.
